# EUROPEAN PATENT APPLICATION

(11) **EP 4 800 805 A1**
(43) Date of publication of application: **02.09.2026**
(21) Application number: 24900391.4
(22) Date of filing: 13.11.2024
(51) Int. Cl.: H01M 10/54, C01G 53/00, C22B 7/00

(54) **METHOD FOR PRODUCING RECYCLED POSITIVE ELECTRODE ACTIVE MATERIAL**

(30) Priority: 07.12.2023 JP 2023207146
(71) Applicant: SUMITOMO CHEMICAL COMPANY, LIMITED, Tokyo 103-6020 (JP); Kyoto University, Kyoto-shi, Kyoto 606-8501 (JP)
(72) Inventor: Takiguchi Takemoto, Marie, Osaka-shi, Osaka 554-8558 (JP); Shimano, Satoshi, Kyoto-shi, Kyoto 606-8501 (JP)
(74) Representative: Vossius & Partner Patentanwälte Rechtsanwälte mbB
(86) International application number: PCT/JP2024/040353
(87) International publication number: WO 2025/121096

(57) **Abstract**

A method for producing a recycled positive electrode active material that reduces an internal resistance of a battery is provided. The method for producing a recycled positive electrode active material includes (1) mixing an activation treatment agent containing one or more alkali metal compounds with a positive electrode mixture containing a positive electrode active material to obtain a mixture, (2) heating the mixture to a temperature equal to or higher than a melting onset temperature of the activation treatment agent to obtain a heated mixture, and (3) recovering a heated positive electrode active material from the heated mixture. The activation treatment agent further contains one or more alkaline earth metal hydroxides.

## Description

### Technical Field

The present invention relates to a method for producing a recycled positive electrode active material.

### Background Art

A positive electrode active material of a battery contains rare metal components such as cobalt, nickel, manganese, and lithium, and in particular, a compound containing the above rare metal components as main components is used as a positive electrode active material of a non-aqueous electrolyte secondary battery. In order to conserve resources of rare metal components, a method for reproducing rare metal components from battery waste materials of secondary batteries is sought.

For example, Patent Literature 1 discloses a method of mixing a positive electrode mixture with an activation treatment agent containing an alkali metal compound, heating the mixture to decompose a binder, and removing decomposition products and the activation treatment agent with water or the like to recover a positive electrode active material. This method is cost-effective in that the positive electrode active material is directly recovered from battery waste materials without using an organic solvent.

### Citation List

### Patent Literature

[Patent Literature 1] Japanese Unexamined Patent Application Publication No. 2012-186150

### Summary of Invention

### Technical Problem

An object of one aspect of the present invention is to provide a method for producing a recycled positive electrode active material that reduces an internal resistance of a battery.

### Solution to Problem

One aspect of the present invention relates to the following method for producing a recycled positive electrode active material.
[1] A method for producing a recycled positive electrode active material, comprising the following steps:
   (1) mixing an activation treatment agent containing one or more alkali metal compounds with a positive electrode mixture containing a positive electrode active material to obtain a mixture,
   (2) heating the mixture to a temperature equal to or higher than a melting onset temperature of the activation treatment agent to obtain a heated mixture,
   (3) recovering a heated positive electrode active material from the heated mixture,
   wherein the activation treatment agent further contains one or more alkaline earth metal hydroxides.

### Advantageous Effects of Invention

According to one aspect of the present invention, a recycled positive electrode active material that reduces the internal resistance of a battery can be produced.

### Description of Embodiments

Hereinafter, a method for producing a recycled positive electrode active material will be described.

A method for producing a recycled positive electrode active material according to an embodiment of the present invention includes the following steps.
Step (1): mixing an activation treatment agent containing one or more alkali metal compounds with a positive electrode mixture containing a positive electrode active material to obtain a mixture
Step (2): heating the mixture to a temperature (for example, a holding temperature) equal to or higher than a melting onset temperature of the activation treatment agent to obtain a heated mixture
Step (3): recovering a heated positive electrode active material from the heated mixture
The activation treatment agent further contains one or more alkaline earth metal hydroxides.

In the present specification, a positive electrode active material that has undergone steps (1) to (3) is referred to as a "recycled positive electrode active material." A recycled positive electrode active material that has undergone steps (1) to (3) can be preferably used for producing a positive electrode and the like. The method for producing a recycled positive electrode active material according to the present embodiment can include additional steps before and after steps (1) to (3). In the present specification, a positive electrode active material that has undergone steps (1) to (3) and subsequent additional steps is also referred to as a "recycled positive electrode active material." Examples of additional steps other than steps (1) to (3) include a positive electrode mixture preparation step and a positive electrode mixture washing step described below, which are carried out before step (1); and step (4) and step (5) described below, which are carried out after step (3).

Hereinafter, each step in the method for producing a recycled positive electrode active material according to the present embodiment will be described in detail.

### (Positive Electrode Mixture Preparation Step)

The method for producing a recycled positive electrode active material according to the present embodiment may include, before step (1), a positive electrode mixture preparation step of preparing a positive electrode mixture containing a positive electrode active material.

The positive electrode mixture may contain a binder. In the positive electrode mixture, particles of the positive electrode active material may be bound to each other by the binder. The positive electrode mixture may contain an electrolyte and/or a conductive material in addition to the positive electrode active material and the binder. When the positive electrode mixture has a conductive material, the particles of the positive electrode active material and the conductive material may be bound to each other by the binder. The electrolyte is a component that is derived from the electrolytic solution of the battery and impregnated into the positive electrode mixture. The positive electrode mixture may contain a fluorine compound derived from the binder and/or the electrolytic solution (for example, the electrolyte in the electrolytic solution).

### <Positive Electrode Active Material>

Examples of the positive electrode active material include composite compounds having, as constituent elements, lithium, oxygen, fluorine, sodium, magnesium, aluminum, silicon, phosphorus, sulfur, potassium, calcium, titanium, vanadium, chromium, manganese, iron, cobalt, nickel, copper, zinc, gallium, yttrium, niobium, molybdenum, silver, indium, tungsten, and the like.

Note that the positive electrode active material may consist of only a single compound or may be composed of a plurality of compounds.

Examples of preferable positive electrode active materials include a composite oxide containing one or more elements selected from Element Group 1 below and one or more elements selected from Element Group 2.
Element Group 1: Ni, Co, Mn, Fe, Al, P
Element Group 2: Li, Na, K, Ca, Sr, Ba, Mg

Among these, it is preferable that the positive electrode active material is represented by the following chemical formula (Formula A).

Li₁₊ₐM²_{b}M¹M^{T}_{c}O_{2+d}Xₑ

wherein M² represents at least one element selected from the group consisting of Na, K, Ca, Sr, Ba, and Mg,
M¹ represents at least one element selected from the group consisting of Ni, Co, Mn, Fe, Al, and P,
M^{T} represents at least one element selected from the group consisting of transition metal elements other than Ni, Co, Mn, and Fe,
X represents at least one element selected from the group consisting of non-metallic elements other than O and P, and
-0.4<a<1.5, 0≤b<0.5, 0≤c<0.5, -0.5<d<1.5, and 0≤e<0.5 are satisfied.

M^{T} is preferably at least one element selected from the group consisting of Cu, Ti, Mg, Al, W, Mo, Nb, Zn, Sn, Zr, Ga, V, B, Si, Ca, Sr, Ba, Ge, Cr, Sc, Y, La, Ta, Tc, Ru, Rh, Pd, Ag, Cd, and In. Examples of X include F, S, Cl, Br, I, Se, Te, and N.

The positive electrode active material is preferably a composite oxide containing at least Li and Ni.

Further, in the positive electrode active material, the molar fraction of Ni in M¹ is more preferably 0.3 to 0.95.

The crystal structure of the composite oxide as the positive electrode active material is not particularly limited, but a layered structure is preferred, and a hexagonal or monoclinic crystal structure is more preferred.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6₁, P6₅, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

The monoclinic crystal structure belongs to any one space group selected from the group consisting of P2, P2₁, C2, Pm, Pc, Cm, Cc, P2/m, P2₁/m, C2/m, P2/c, P2₁/c, and C2/c.

Furthermore, it is preferable that the crystal structure belongs to the space group R-3m included in the hexagonal crystal structure or C2/m included in the monoclinic crystal structure.

Note that the crystal structure of the positive electrode active material is identified from a powder X-ray diffraction pattern obtained by powder X-ray diffraction measurement using CuKα radiation as a source.

The particle diameter of the positive electrode active material in the positive electrode mixture is not particularly limited, but is usually about 0.001 to 100 µm. Note that the particle size distribution of the positive electrode active material can be measured using a laser diffraction scattering particle size distribution analyzer (for example, Mastersizer 2000 manufactured by Malvern Ltd). From the obtained particle size distribution, a volume-based cumulative particle size distribution curve can be created, and the particle diameter at 50% cumulation from the fine particle side (D50) can be used as the average particle diameter of the powder.

### <Conductive Material>

Examples of the conductive material include metal-based conductive materials such as metal particles, and carbon-based conductive materials composed of carbon materials.

Examples of the carbon-based conductive material include graphite powder, carbon black (for example, acetylene black), and fibrous carbon materials (for example, graphitized carbon fiber and carbon nanotubes).

The carbon-based conductive material may be a single carbon material or may be composed of a plurality of carbon materials.

Further, the specific surface area of the carbon material used as the carbon-based conductive material can usually be 0.1 to 500 m²/g.

In that case, the conductive material can consist solely of a carbon-based conductive material having a specific surface area of 30 m²/g or more, may be carbon black having a specific surface area of 30 m²/g or more, or may be acetylene black having a specific surface area of 30 m²/g or more. The specific surface area of the carbon-based conductive material may be 30 m²/g or more and 500 m²/g or less.

Note that when an activation treatment agent containing an alkali metal compound having oxidizing power, which will be described later, is used, the rate of oxidation treatment of the carbon-based conductive material can be increased, and even a carbon material having a small specific surface area may be able to be subjected to oxidation treatment in some cases.

### <Binder>

Examples of the binder (binder before activation treatment) contained in the positive electrode mixture are thermoplastic resins, and specifically include fluororesins such as polyvinylidene fluoride (hereinafter sometimes referred to as PVdF), polytetrafluoroethylene (hereinafter sometimes referred to as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; polyolefin resins such as polyethylene and polypropylene; styrene-butadiene copolymers (hereinafter sometimes referred to as SBR); and a mixture of two or more of these may also be used.

There is no particular limitation on the blending amounts of the positive electrode active material, the conductive material, and the binder in the positive electrode mixture. The blending amount of the binder can be 0.5 to 30 parts by weight relative to 100 parts by weight of the positive electrode active material, and may be 1 to 5 parts by weight. The blending amount of the conductive material may be 0, but can be 0 to 50 parts by weight relative to 100 parts by weight of the positive electrode active material, and may be 1 to 10 parts by weight.

### <Electrolyte and Solvent>

Examples of the electrolyte include LiPF₆, LiBF₄, LiClO₄, LiN(SO₂CF₃)₂, LiN(SO₂F)₂, and LiCF₃SO₃. The amount of the electrolyte contained in the positive electrode mixture is not limited, but can be 0.0005 to 7 mass%.

The positive electrode mixture may contain a solvent derived from the electrolytic solution. Examples of the solvent include dimethyl carbonate, diethyl carbonate, and ethyl methyl carbonate.

### <Recovery of Positive Electrode Mixture>

Such a positive electrode mixture can be obtained by separating and recovering the positive electrode mixture from a waste positive electrode having a current collector and a positive electrode mixture layer.

A "waste positive electrode" can be a positive electrode recovered from a discarded battery, and waste of a positive electrode generated in the process of manufacturing a positive electrode and a battery. The discarded battery may be a used battery or an unused battery that is a non-conforming product. Further, the waste of the positive electrode can be an end portion of the positive electrode generated in the battery manufacturing process and a non-conforming positive electrode. In addition, as the positive electrode mixture, a waste product of the positive electrode mixture that is generated in the positive electrode mixture manufacturing process and is not attached to a current collector can also be used.

The waste positive electrode has a current collector that is a metal foil such as aluminum foil and copper foil, and a positive electrode mixture layer provided on the current collector. The positive electrode mixture layer may be provided on one side of the current collector or on both sides.

Methods for separating the positive electrode mixture from a waste positive electrode having a positive electrode mixture layer and a current collector include a method of mechanically peeling the positive electrode mixture layer from the current collector (for example, a method of scraping off the positive electrode mixture from the current collector), a method of making a solvent permeate into the interface between the positive electrode mixture layer and the current collector to peel the positive electrode mixture layer from the current collector, and a method of dissolving the current collector using an alkaline or acidic aqueous solution to separate the positive electrode mixture layer. A method of mechanically peeling the positive electrode mixture layer from the current collector is preferred.

### (Positive Electrode Mixture Washing Step)

Subsequently, when the positive electrode mixture contains an electrolyte, it is preferable to bring an electrolyte washing solvent into contact with the prepared positive electrode mixture to remove at least a part of the electrolyte from the positive electrode mixture. Specifically, the positive electrode mixture containing the positive electrode active material and the electrolyte is brought into contact with the electrolyte washing solvent to obtain a slurry containing a solid component and a liquid component, and then the slurry is separated into the solid component and the liquid component.

Solid-liquid separation is a step of separating the slurry into a liquid component and a solid component. The method of solid-liquid separation may be a conventionally known method, and examples thereof include filtration and centrifugation.

There is no particular limitation on the electrolyte washing solvent. Examples thereof include carbonate esters such as ethylene carbonate, dimethyl carbonate, ethyl methyl carbonate, diethyl carbonate, and propylene carbonate; water; ketones such as acetone, methyl ethyl ketone, diethyl ketone, and methyl isobutyl ketone; and alcohols such as ethanol, methanol, propanol, and isopropyl alcohol.

Bringing the electrolyte washing solvent into contact with the positive electrode mixture can be carried out using a known powder-liquid contact device, such as a stirring tank.

In the step of bringing the positive electrode mixture into contact with the electrolyte washing solvent, it is preferable to stir the positive electrode mixture and the electrolyte washing solvent to obtain a slurry. The peripheral speed of the tip of the stirring blade can be set to 0.1 to 1.0 m/s.

In the positive electrode mixture washing step, after solid-liquid separation, rinsing of the obtained solid component may be carried out. Rinsing is an operation of bringing the electrolyte washing solvent into contact with the obtained solid component again to obtain a slurry, and then separating the slurry again into a solid component and a liquid component. In the washing of the positive electrode mixture, rinsing may be carried out multiple times. The slurry concentration in rinsing can also be the same as described above. In rinsing, the slurry can also be stirred as described above.

The electrolyte can be sufficiently removed from the positive electrode mixture by the above washing. For example, if the electrolyte remains, the following reaction occurs, and the structure of the positive electrode active material changes from a layered rock salt structure to a spinel structure.

LiPF₆ + 16LiMO₂ + 2O₂ → 6LiF + Li₃PO₄ + 8LiM₂O₄

In addition, when lithium carbonate is contained as an activating agent, consumption of lithium by the following reaction also occurs.

LiPF₆ + 4Li₂CO₃ → 6LiF + Li₃PO₄ + 4CO₂

The separated solid component can be dried to remove the electrolyte washing solvent by reduced pressure and/or heating as necessary. The heating temperature can be 50 to 200°C.

### (Step (1): Activation Treatment Agent Mixing Step)

In step (1), an activation treatment agent is mixed with a positive electrode mixture containing a positive electrode active material to obtain a mixture. The activation treatment agent contains one or more alkali metal compounds and one or more alkaline earth metal hydroxides.

The method of mixing the positive electrode mixture and the activation treatment agent may be either dry mixing or wet mixing, or a combination of these mixing methods, and the order of mixing is not particularly limited.

During mixing, it is preferable to perform a step of pulverizing and mixing using a mixing device equipped with mixing media such as balls, whereby the mixing efficiency can be improved.

As the mixing method, dry mixing is preferred in that mixing can be performed more easily. In dry mixing, a V-type mixer, a W-type mixer, a ribbon mixer, a drum mixer, a powder mixer equipped with stirring blades inside, a ball mill, a vibration mill, or a combination of these devices can be used.

As the mixing device used for dry mixing, a powder mixer equipped with stirring blades inside is preferred, and specifically, a Lödige mixer (manufactured by Matsubo Corporation) can be mentioned.

Hereinafter, the activation treatment agent used in this step will be described in detail.

### <Activation Treatment Agent>

The activation treatment agent contains one or more alkali metal compounds. It is preferable that the activation treatment agent contains at least one compound selected from the group consisting of potassium compounds and sodium compounds. Here, potassium and/or sodium may sometimes be referred to as alkali metal element X. The activation treatment agent may contain, in addition to the potassium compound and/or sodium compound, an alkali metal compound containing another alkali metal such as Li.

When the activation treatment agent comes into contact with the positive electrode active material, the positive electrode active material can be activated. In particular, when the alkali metal compound in the activation treatment agent contains a molten portion, the contact between the molten portion and the positive electrode active material is improved, whereby the activation of the positive electrode active material is further promoted.

Further, the positive electrode mixture may contain a fluorine-containing compound derived from the binder and/or the electrolytic solution, and when the fluorine-containing compound is brought into contact with the activation treatment agent, the fluorine component is stabilized as an alkali metal fluoride, so that generation of corrosive gases such as hydrogen fluoride can be suppressed. Note that it is also desirable to prevent the generation of hydrogen fluoride since hydrogen fluoride reduces the activity of the positive electrode active material.

The proportion of all alkali metal compounds in the activation treatment agent is appropriately set in consideration of the type of alkali metal compound, the type of target positive electrode active material, and the like, and is usually 50 wt% or more, preferably 70 wt% or more (including 100 wt%), relative to the total weight of the activation treatment agent.
The concentration of at least one alkali metal selected from the group consisting of potassium and sodium among the alkali metals contained in the alkali metal compound can be arbitrarily adjusted in the range of 0 to 100 mol%, but is preferably 10 mol% or more, more preferably 20 mol% or more, preferably 90 mol% or less, and more preferably 80 mol% or less.

Examples of the alkali metal compound serving as a component of the activation treatment agent include hydroxides, borates, carbonates, oxides, peroxides, superoxides, nitrates, phosphates, sulfates, chlorides, vanadates, bromates, molybdates, and tungstates of alkali metals. These can be used alone or in combination of two or more as components of the activation treatment agent.

Specific examples of preferable alkali metal compounds include
hydroxides such as LiOH, NaOH, KOH, RbOH, and CsOH;
borates such as LiBO₂, NaBO₂, KBO₂, RbBO₂, and CsBO₂;
carbonates such as Li₂CO₃, Na₂CO₃, K₂CO₃, RbCO₃, and CsCO₃;
oxides such as Li₂O, Na₂0, K₂O, Rb₂O, and Cs₂O;
peroxides such as Li₂O₂, Na₂O₂, K₂O₂, Rb₂O₂, and Cs₂O₂;
superoxides such as LiO₂, NaO₂, KO₂, RbO₂, and CsO₂;
nitrates such as LiNO₃, NaNO₃, KNO₃, RbNO₃, and CsNO₃;
phosphates such as Li₃PO₄, Na₃PO₄, K₃PO₄, Rb₃PO₄, and Cs₃PO₄;
sulfates such as Li₂SO₄, Na₂SO₄, K₂SO₄, Rb₂SO₄, and Cs₂SO₄;
chlorides such as LiCl, NaCl, KCl, RbCl, and CsCl;
bromides such as LiBr, NaBr, KBr, RbBr, and CsBr;
vanadates such as LiVO₃, NaVO₃, KVO₃, RbVO₃, and CsVO₃;
molybdates such as Li₂MoO₄, Na₂MoO₄, K₂MoO₄, Rb₂MoO₄, and CsMoO₄; and
tungstates such as Li₂WO₄, Na₂WO₄, K₂WO₄, Rb₂WO₄, and CsWO₄.

Here, in order to further enhance the activation effect on the positive electrode active material, the activation treatment agent can contain, in addition to at least one compound selected from the group consisting of potassium compounds and sodium compounds, an alkali metal element that is the same as the alkali metal element contained in the positive electrode active material in the positive electrode mixture.

That is, when the positive electrode active material in the positive electrode mixture is a lithium composite oxide, it is preferable that the activation treatment agent contains a lithium compound in addition to at least one compound selected from the group consisting of potassium compounds and sodium compounds. Preferable lithium compounds include LiOH, LiBO₂, Li₂CO₃, Li₂O, Li₂O₂, LiO₂, LiNO₃, Li₃PO₄, Li₂SO₄, LiCl, LiVO₃, LiBr, Li₂MoO₄, and Li₂WO₄.

The activation treatment agent contains one or more alkaline earth metal hydroxides. The alkaline earth metal hydroxide is contained in the activation treatment agent together with the alkali metal compound for the purpose of controlling the melting onset temperature of the activation treatment agent. Furthermore, the alkaline earth metal hydroxide can reduce the internal resistance (impedance or direct current resistance) of a battery using the recycled positive electrode active material in the positive electrode. That is, the internal resistance of a battery using a recycled positive electrode active material produced using both an alkali metal compound and an alkaline earth metal hydroxide as the activation treatment agent is lower than the internal resistance of a battery using a recycled positive electrode active material produced using only an alkali metal compound as the activation treatment agent. The inventors infer that the formation of a high-temperature reaction field containing not only an alkali metal compound but also an alkaline earth metal hydroxide promotes the regeneration of the crystal structure of the surface of the positive electrode active material, thereby reducing (recovering) the reaction resistance of the battery (a resistance component due to the rate limitation of chemical reactions).

The total content of alkaline earth metals in the activation treatment agent may be 0.5 mol% or more. When the total content of alkaline earth metals in the activation treatment agent is 0.5 mol% or more, the internal resistance of a battery using the recycled positive electrode active material in the positive electrode is easily reduced. When the amount of substance (unit: mol) of the alkaline earth metal (Group 2 element) in the activation treatment agent is expressed as m, and the total amount of substance of the alkali metal compound (molecule) and the alkaline earth metal compound (molecule) in the activation treatment agent is expressed as M, the total content of alkaline earth metals in the activation treatment agent may be expressed as {100×(m/M)} mol%.
The upper limit of the total content of alkaline earth metals in the activation treatment agent is not limited. For example, the total content of alkaline earth metals in the activation treatment agent may be 0.5 mol% or more and 50 mol% or less. The total content of alkaline earth metals in the activation treatment agent is preferably 0.5 mol% or more and less than 14.3 mol%, or may be 0.5 mol% or more and 9.1 mol% or less. When the total content of alkaline earth metals in the activation treatment agent is less than 14.3 mol% or 9.1 mol% or less, the rate characteristics (discharge capacity at each C rate) of a battery using the recycled positive electrode active material in the positive electrode tend to improve.
The total content of alkaline earth metals in the activation treatment agent is more preferably 0.5 mol% or more and less than 9.1 mol%, or may be 0.5 mol% or more and 3.2 mol% or less. When the total content of alkaline earth metals in the activation treatment agent is less than 9.1 mol% or 3.2 mol% or less, the initial charge capacity, initial discharge capacity, initial charge-discharge efficiency, and initial discharge capacity recovery rate tend to improve.
The total content of alkaline earth metals in the activation treatment agent may be 0.5 mol% or more and 14.3 mol% or less, 0.5 mol% or more and 11.7 mol% or less, 0.5 mol% or more and 9.1 mol% or less, 0.5 mol% or more and 6.2 mol% or less, 0.5 mol% or more and 3.2 mol% or less, 0.5 mol% or more and 2.4 mol% or less, 0.5 mol% or more and 1.6 mol% or less, 1.6 mol% or more and 14.3 mol% or less, 1.6 mol% or more and 11.7 mol% or less, 1.6 mol% or more and 9.1 mol% or less, 1.6 mol% or more and 6.2 mol% or less, 1.6 mol% or more and 3.2 mol% or less, or 1.6 mol% or more and 2.4 mol% or less.

The alkaline earth metal contained in the alkaline earth metal hydroxide may be one or more elements selected from the group consisting of beryllium, magnesium, calcium, strontium, and barium. The alkaline earth metal contained in the alkaline earth metal hydroxide is preferably one or both of magnesium and calcium. The alkaline earth metal hydroxide may be one or more hydroxides selected from the group consisting of Be(OH)₂, Mg(OH)₂, Ca(OH)₂, Sr(OH)₂, and Ba(OH)₂.

The activation treatment agent may contain compounds other than the alkali metal compound and the alkaline earth metal hydroxide as necessary. Further, the content of compounds other than the alkali metal compound in the activation treatment agent is selected within a range that does not significantly suppress the effects derived from the molten alkali metal compound described above, and can be less than 50 wt% of the total weight of the activation treatment agent.

The amount of the activation treatment agent added in the mixture of the positive electrode mixture and the activation treatment agent is preferably 0.001 to 100 times, and more preferably 0.05 to 1 times, the weight of the positive electrode active material contained in the positive electrode mixture.

The number of moles of the alkali metal compound in the activation treatment agent in the mixture of the positive electrode mixture and the activation treatment agent can be added such that the number of moles of the alkali metal element is 0.001 to 200 times when the number of moles of the positive electrode active material (for example, Formula A) contained in the positive electrode mixture is taken as 1.

By appropriately controlling the proportion of the activation treatment agent in the mixture, the cost for recovering the positive electrode active material from the positive electrode mixture can be reduced, and the rate of oxidative decomposition treatment of the carbon-based conductive material and the binder can be increased. In addition, the effect of preventing the generation of corrosive gases in the heating step can be improved, and furthermore, the discharge capacity of a battery produced using the obtained positive electrode active material can be further increased.

Further, it is preferable that at least one of the alkali metal compounds contained in the activation treatment agent is an alkali metal compound that exhibits alkalinity when dissolved in water. An activation treatment agent containing such an alkali metal compound has a pH greater than 7 when dissolved in pure water. Hereinafter, such an activation treatment agent may be referred to as an "alkaline activation treatment agent."

By using an alkaline activation treatment agent, generation of corrosive gases in the heating step can be further suppressed, so that the discharge capacity of a battery produced using the recovered positive electrode active material can be further increased. In addition, by using an alkaline activation treatment agent, the treatment rate of the carbon-based conductive material and the binder can also be increased.

Examples of the alkali metal compound that exhibits alkalinity when dissolved in water, which is contained in the alkaline activation treatment agent, include hydroxides, carbonates, hydrogen carbonates, oxides, peroxides, and superoxides of alkali metals. Specifically, LiOH, NaOH, KOH, RbOH, CsOH; Li₂CO₃, Na₂CO₃, K₂CO₃, RbCO₃, CsCO₃; LiHCO₃, NaHCO₃, KHCO₃, RbHCO₃, CsHCO₃; Li₂O, Na₂O, K₂O, Rb₂O, Cs₂O; Li₂O₂, Na₂O₂, K₂O₂, Rb₂O₂, Cs₂O₂; LiO₂, NaO₂, KO₂, RbO₂, CsO₂; are included. One or two or more of these may be included in the activation treatment agent.

Further, when the conductive material contained in the positive electrode mixture is a carbon-based conductive material, at least one of the alkali metal compounds contained in the activation treatment agent may be an alkali metal compound having oxidizing power to oxidatively decompose the carbon-based conductive material at the temperature of the heating step. Note that an activation treatment agent containing such an alkali metal compound may hereinafter be referred to as an "activation treatment agent having oxidizing power."

Using such an activation treatment agent having oxidizing power is particularly effective in promoting the oxidation of the conductive material, which is a carbon material, to carbon dioxide, and in promoting the oxidation of the binder, which is a hydrocarbon material, to carbon dioxide and water vapor, and may further increase the discharge capacity of a battery produced using the obtained positive electrode active material, and may also improve the effect of preventing the generation of corrosive gases in the heating step in some cases.

Examples of alkali metal compounds having oxidizing power necessary to oxidize carbon-based conductive materials and hydrocarbons to carbon dioxide and water vapor include peroxides, superoxides, nitrates, sulfates, vanadates, and molybdates of alkali metals. These may be used alone or in combination of two or more.

Specifically, Li₂O₂, Na₂O₂, K₂O₂, Rb₂O₂, Cs₂O₂; LiO₂, NaO₂, KO₂, RbO₂, CsO₂; LiNO₃, NaNO₃, KNO₃, RbNO₃, CsNO₃; Li₂SO₄, Na₂SO₄, K₂SO₄, Rb₂SO₄, Cs₂SO₄; LiVO₃, NaVO₃, KVO₃, RbVO₃, CsVO₃; Li₂MoO₄, Na₂MoO₄, K₂MoO₄, Rb₂MoO₄, CsMoO₄; are included.

Details of the oxidizing power of these alkali metal compounds are described in Japanese Unexamined Patent Application Publication No. 2012-186150.

### (Step (2): Heating Step)

The heating step is a step of heating the mixture obtained in step (1) (hereinafter sometimes referred to as the "mixture before heating") to a temperature equal to or higher than the melting onset temperature of the activation treatment agent. For example, the temperature of the mixture in the heating step may be maintained at a temperature equal to or higher than the melting onset temperature of the activation treatment agent. However, the temperature of the mixture in the heating step does not always need to be equal to or higher than the melting onset temperature of the activation treatment agent. The mixture obtained in this heating step may sometimes be referred to as the "heated mixture."

Note that the "melting onset temperature (Tmp) of the activation treatment agent" means the lowest temperature at which a part of the activation treatment agent exhibits a liquid phase.

The melting onset temperature (Tmp) of the activation treatment agent is a value determined by differential thermal analysis (DTA). That is, 5 mg of the above mixture before heating is subjected to differential thermal analysis (DTA, measurement conditions: heating rate: 10°C/min), and the temperature at which the DTA signal shows an endothermic peak is taken as the melting onset temperature (Tmp).

The melting onset temperature (Tmp) of the activation treatment agent is preferably 700°C or less, and more preferably 600°C or less. There is no lower limit for the melting onset temperature (Tmp) of the activation treatment agent, but it may be, for example, 150°C.

Further, the melting point of the activation treatment agent means the lowest temperature at which a part of the activation treatment agent exhibits a liquid phase when only the activation treatment agent is heated. By mixing the positive electrode mixture and the activation treatment agent, the melting onset temperature (Tmp) of the activation treatment agent becomes lower than the melting point of the activation treatment agent.

The melting point of the activation treatment agent is a value determined by differential thermal analysis (DTA). Specifically, 5 mg of the activation treatment agent is subjected to differential thermal analysis (DTA, measurement conditions: heating rate: 10°C/min), and the temperature at which the DTA signal shows an endothermic peak is taken as the melting point of the activation treatment agent.

There is no particular limitation on the atmosphere during heating, and it may be an oxygen-containing gas such as air, or nitrogen, argon, or carbon dioxide. There is no particular limitation on the pressure of the atmosphere, but it can be atmospheric pressure, or may be a reduced pressure atmosphere or a pressurized atmosphere.

In step (2), by heating the mixture before heating to a temperature equal to or higher than the melting onset temperature (Tmp) of the activation treatment agent as described above, the following effects occur.

By bringing the activation treatment agent in a molten state into contact with the positive electrode active material, deterioration of the crystal structure of the positive electrode active material can be suppressed. In addition, in some cases, a repairing effect on the crystal structure can also be obtained.

When the activation treatment agent in a molten state comes into contact with the carbon-based conductive material and the binder, the rate of oxidative decomposition of the conductive material and the binder is improved, and furthermore, when the activation treatment agent in a molten state comes into contact with the fluorine compound derived from the binder and the electrolytic solution, the fluorine component is stabilized as an alkali metal fluoride, preventing the generation of hydrogen fluoride, which is a corrosive gas, and suppressing deterioration of the crystal structure of the positive electrode active material.

Furthermore, when the activation treatment agent contains the same alkali metal as the positive electrode active material, it is also possible to supply the alkali metal that is deficient in the positive electrode active material.

The temperature of the heating step and the holding time at that temperature can be appropriately adjusted depending on the respective types and combinations of the positive electrode active material, the conductive material, and the binder constituting the positive electrode mixture, and the alkali metal compound and other compounds contained in the activation treatment agent. Usually, the temperature is in the range of 100 to 1500°C, and the holding time is about 10 minutes to 24 hours.

The temperature of the heating step is preferably higher than the melting point of the alkali metal compound contained in the activation treatment agent. Note that the melting point of the alkali metal compound may be lower than the melting point of each individual compound when a plurality of types of compounds are mixed. When the activation treatment agent contains two or more alkali metal compounds, the eutectic point is taken as the melting point of the alkali metal compounds.

After the heating step, the mixture can be cooled to any temperature, such as approximately room temperature, as necessary. In this way, a heated mixture containing the heated positive electrode active material is obtained.

(Step (3): Positive Electrode Active Material Recovery Step) The positive electrode active material recovery step is a step of recovering the heated positive electrode active material from the heated mixture after the heating step of step (2).

The heated mixture contains, in addition to the heated positive electrode active material, components derived from the activation treatment agent (such as alkali metal compounds), an undecomposed conductive material and binder, and other undecomposed materials of the positive electrode mixture. In addition, when the positive electrode mixture contains an electrolytic solution containing a fluorine component, the heated mixture may also contain a fluorine component derived from the electrolyte.

Methods for separating and recovering the heated positive electrode active material from the heated mixture include a solid-liquid separation method in which a solvent such as water is added to the mixture to form a slurry and then solid-liquid separation is performed, and a vaporization separation method in which the mixture is heated to vaporize and separate components other than the heated positive electrode active material. Hereinafter, the solid-liquid separation step in which the solid-liquid separation method is performed will be described.

### Step (3a): Solid-Liquid Separation Step

Step (3a) is a step of bringing the heated mixture into contact with a liquid containing water to obtain a slurry containing a solid component and a liquid component, and then separating the slurry into the solid component and the liquid component.

The heated mixture contains, in addition to the heated positive electrode active material, components derived from the activation treatment agent (such as alkali metal compounds and alkaline earth metal hydroxides), the undecomposed conductive material and binder, and other undecomposed materials of the positive electrode mixture. In addition, when the positive electrode mixture contains an electrolytic solution containing a fluorine component, the heated mixture may also contain a fluorine component derived from the electrolyte.

In order to separate and recover the heated positive electrode active material from the heated mixture, a liquid containing water (liquid) is added to the mixture to form a slurry, and then solid-liquid separation is performed to separate the mixture into a solid component and a liquid component.

The liquid used in the slurrying step is not particularly limited as long as it contains water. The amount of water in the liquid may be 50 mass% or more. A component other than water may be added to the liquid to adjust the pH in order to increase the solubility of water-soluble components or to increase the processing rate.
Preferable examples of the liquid containing water include pure water and an alkaline cleaning solution. Examples of the alkaline cleaning solution include one or more anhydrates selected from the group consisting of lithium hydroxide, sodium hydroxide, potassium hydroxide, lithium carbonate, sodium carbonate, potassium carbonate, and ammonium carbonate, and an aqueous solution of a hydrate of the anhydrate. In addition, ammonia can also be used as the alkali.

The obtained slurry contains a solid component mainly containing the heated positive electrode active material and a liquid component containing water-soluble components other than the positive electrode active material. Note that the liquid component contains an alkali metal component and an alkaline earth metal component derived from the activation treatment agent, and/or a fluorine component derived from the binder and the electrolytic solution.

The amount of liquid added to the mixture is appropriately determined in consideration of the respective amounts of the heated positive electrode active material contained in the mixture and the water-soluble components other than the positive electrode active material.

In step (3a), it is preferable to stir the heated mixture and the liquid containing water to obtain a slurry. This promotes the dissolution of water-soluble components. The peripheral speed of the tip of the stirring blade is preferably set to 0.1 to 0.9 m/s.

The slurry formed in the slurrying step is then subjected to solid-liquid separation. Solid-liquid separation is a step of separating the slurry into a liquid component and a solid component. The method of solid-liquid separation may be a conventionally known method, and examples thereof include filtration and centrifugation.

In step (3a), after solid-liquid separation, rinsing of the obtained solid component may be carried out. Rinsing is an operation of bringing a liquid containing water into contact with the obtained solid component again to obtain a slurry, and then separating the slurry again into a solid component and a liquid component. In step (3a), rinsing may be carried out multiple times. The slurry concentration in rinsing can also be the same as described above.

### (Step (4): Drying Step)

Step (4) is a step of removing water from the solid component by exposing the solid component obtained in step (3a) to a heating and/or reduced pressure environment.

The heating temperature is preferably 100°C or higher in order to remove water. It is further preferable to set the temperature to 150°C or higher in order to sufficiently remove water. In particular, at a temperature of 250°C or higher, the discharge capacity of a battery produced using the obtained positive electrode active material is further increased, which is preferable. The temperature in the drying step may be constant or may be changed stepwise or continuously. The achieved temperature range of heating can be, for example, 10°C or higher and lower than 900°C.

The achieved pressure range of reduced pressure can be, for example, 1.0×10⁻¹⁰ to 1.0×10³ Pa.

### (Step (5): Annealing (Re-sintering) Step)

Step (5) is preferably a step of heat-treating the solid component after step (4) at a temperature lower than 900°C.

There is no limitation on the atmosphere of the heat treatment, but an oxygen-containing atmosphere such as air is preferable. Further, the temperature of the heat treatment can be 100°C or higher. The temperature of the heat treatment may be 100°C or higher and lower than 900°C, or may be 350°C or higher and lower than 900°C. Further, the holding time of the heat treatment can be 1 minute to 24 hours. In particular, it is preferable to heat at a holding temperature of 350°C or higher for 0.1 hours or more and 5 hours or less.

The recycled positive electrode active material obtained from the battery mixture by using the method for producing a recycled positive electrode active material of the present invention can be reused in the same manner as an unused active material. Methods for producing a positive electrode and a battery using the recycled positive electrode active material are well known.

The discharge capacity of the finally obtained recycled positive electrode active material according to the embodiment of the present invention can be 150 mAh/g or more.

### [Examples]

Hereinafter, the present invention will be described in further detail by way of examples, but the present invention is not limited to the following examples as long as the gist thereof is not changed.

### (Example 1)

A simulated mixture (positive electrode mixture) was produced by mixing 100 parts by mass of LiNi_{0.6}Co_{0.2}Mn_{0.2}O₂ (positive electrode active material), 5 parts by mass of carbon black (conductive material), and 3 parts by mass of PVdF (binder).

In step (1), a mixture was obtained by mixing an activation treatment agent with the above simulated mixture. The activation treatment agent consisted of a Li replenishment material, activating agent 1, and activating agent 2. The Li replenishment material was Li₂CO₃, activating agent 1 was K₂SO₄, and activating agent 2 was Mg(OH)₂. The blending amounts of the Li replenishment material, activating agent 1, and activating agent 2 in the activation treatment agent were each adjusted to the values shown in Table 1 below. The total content of alkaline earth metals in the activation treatment agent was adjusted to the values shown in Table 1 below.
The "amount of substance of positive electrode active material" in Table 1 below means the amount of substance of the positive electrode active material in the simulated mixture.
The "proportion of Li replenishment material" in Table 1 below means the proportion of the Li replenishment material relative to 100 mol% of the positive electrode active material (positive electrode active material in the simulated mixture).
The "proportion of activating agent 1" in Table 1 below means the proportion of activating agent 1 relative to 100 mol% of the positive electrode active material (positive electrode active material in the simulated mixture).
The "proportion of activating agent 2" in Table 1 below means the proportion of activating agent 2 relative to 100 mol% of the positive electrode active material (positive electrode active material in the simulated mixture).

In step (2) following step (1), 5 g of the above mixture was placed in an alumina boat-type container and set in a gas furnace. The atmosphere in the gas furnace was air. The mixture in the gas furnace was heated at 700°C for 3 hours. 700°C was a temperature equal to or higher than the melting onset temperature of the activation treatment agent. After the heated mixture was cooled to room temperature by natural cooling, the heated mixture was taken out of the gas furnace.

In step (3) following step (2), the heated mixture was pulverized. Distilled water was added to the pulverized mixture to prepare a slurry. The content of the mixture in the slurry was adjusted to 2 mass%. After stirring the slurry, decantation of the slurry was performed. After decantation, the solid phase was separated and recovered from the slurry by filtration of the slurry. The recovered solid phase was rinsed with water.

In step (4) following step (3), vacuum drying of the solid phase was performed at 100°C.

In step (5) following step (4), the solid phase was heated in air at 700°C for 1 hour.

By the above production method, the recycled positive electrode active material of Example 1 was obtained.

### <Production of Positive Electrode>

The recycled positive electrode active material of Example 1, a binder solution, and a conductive material were kneaded using a rotation-revolution mixer (ARE-310, manufactured by Thinky Corporation) to produce a positive electrode mixture paste. The weight ratio of recycled positive electrode active material : binder : conductive material was adjusted to 92:3:5. As the binder solution, NMP (N-methyl-2-pyrrolidone) in which PVdF (#1100, manufactured by Kureha Corporation) as the binder was dissolved was used. The composition of the binder solution was adjusted by adding NMP so that the total weight of the positive electrode active material, the conductive material, and the binder in the positive electrode mixture paste was 50 wt%. As the conductive material, acetylene black (manufactured by Denki Kagaku Kogyo Kabushiki Kaisha, product number: Denka Black HS100) was used.

The positive electrode mixture paste was applied to the surface of a current collector. The mass of the positive electrode active material on the surface of the current collector was adjusted to 3.0±0.1 mg/cm². The current collector coated with the positive electrode mixture paste was vacuum-dried at 150°C for 8 hours to obtain a positive electrode. The electrode area of the positive electrode was 1.65 cm². As the current collector, aluminum foil (1085, manufactured by Nippon Foil Co., Ltd.) was used. The thickness of the current collector was 20 µm.

### <Production of Battery>

The above-described positive electrode, an electrolytic solution, a separator, and a negative electrode were combined to produce a non-aqueous electrolyte lithium ion secondary battery (coin-type battery) of Example 1. Note that the assembly of the battery was performed in a glove box under an argon atmosphere.

LiPF₆ was used as the electrolyte in the electrolytic solution. The concentration of LiPF₆ in the electrolytic solution was adjusted to 1.0 mol/L. As the solvent of the electrolytic solution, a mixed liquid of ethylene carbonate, dimethyl carbonate, and ethyl methyl carbonate was used. The volume ratio of ethylene carbonate, dimethyl carbonate, and ethyl methyl carbonate was adjusted to 30:35:35.

As the separator, a laminated film separator in which a heat-resistant porous layer was laminated on a polyethylene porous film was used. Further, metallic lithium was used as the negative electrode.

### <Charge-Discharge Test>

The initial charge capacity and initial discharge capacity of the above battery of Example 1 were measured. The temperature of the battery during measurement was maintained at 25°C. The initial charge-discharge efficiency was calculated by dividing the initial discharge capacity by the initial charge capacity. The initial charge-discharge was carried out under the following conditions.
Maximum charge voltage: 4.3 V, charge rate: 0.2 C, constant current constant voltage charging
Minimum discharge voltage: 2.5 V, discharge rate: 0.2 C, constant current discharging

The initial discharge capacity recovery rate was calculated from the initial discharge capacity of the battery of Example 1 (a battery using the recycled positive electrode active material). When the initial discharge capacity of the battery using the recycled positive electrode active material is X mAh/g, and the discharge capacity (standard value) in the initial charge-discharge at 0.2 C of the battery (Reference Example 1) using an unused simulated mixture as the positive electrode material is Y mAh/g (= 179 mAh/g), the initial discharge capacity recovery rate is calculated by the following formula (a).$Initial discharge capacity recovery rate \left(%\right) = X / Y \times 100$

Following the initial charge-discharge, the discharge capacity in each of the following charge-discharge cycles was measured. The temperature of the battery during measurement was maintained at 25°C. The minimum discharge voltage in each charge-discharge cycle was 2.5 V.
2nd cycle (charge rate: 0.2 C, discharge rate: 0.2 C)
3rd cycle (charge rate: 0.2 C, discharge rate: 0.5 C)
4th cycle (charge rate: 0.2 C, discharge rate: 1 C)
5th cycle (charge rate: 0.2 C, discharge rate: 2 C)
6th cycle (charge rate: 0.2 C, discharge rate: 5 C)
The rate retention rate was calculated by dividing the discharge capacity of the 5th cycle (2 C) by the discharge capacity of the 2nd cycle (0.2 C).

### <Internal Resistance Measurement>

The internal resistance (charge transfer resistance) of the battery of Example 1 at 100% SOC (State Of Charge) was measured by the following alternating current impedance method.
The battery was subjected to constant current constant voltage charging at a maximum charge voltage of 4.3 V and a charge current of 0.2 C, and a Cole-Cole plot was created by sweeping the frequency in the range of 1 MHz to 0.1 Hz using an alternating current impedance measuring device. The vertical axis of the Cole-Cole plot is the imaginary part of the complex impedance, and the horizontal axis of the Cole-Cole plot is the real part of the complex impedance. Subsequently, the arc portion contained in 100 Hz to 1 Hz in the Cole-Cole plot was fitted with a circle, thereby identifying the diameter of the circle, that is, the charge transfer resistance. As the alternating current impedance measuring devices, a frequency response analyzer Solartron 1260 and a potentiostat/galvanostat Solartron 1287 were used.

The above measurement results are shown in Table 2 below.

### (Examples 2 to 4)

The blending amounts of the Li replenishment material, activating agent 1, and activating agent 2 in the activation treatment agent of each of Examples 2 to 4 were adjusted to the values shown in Table 1 below. The total content of alkaline earth metals in the activation treatment agent of each of Examples 2 to 4 was adjusted to the values shown in Table 1 below.
Except for the above matters, the recycled positive electrode active material and battery of each of Examples 2 to 4 were produced in the same manner as in Example 1. Measurements using the battery of each of Examples 2 to 4 were carried out in the same manner as in Example 1. The measurement results of each of Examples 2 to 4 are shown in Table 2 below.

### (Examples 5 to 8)

The activating agent 2 contained in the activation treatment agent of each of Examples 5 to 8 was Ca(OH)₂, not Mg(OH)₂. The blending amounts of the Li replenishment material, activating agent 1, and activating agent 2 in the activation treatment agent of each of Examples 5 to 8 were adjusted to the values shown in Table 1 below. The total content of alkaline earth metals in the activation treatment agent of each of Examples 5 to 8 was adjusted to the values shown in Table 1 below. Except for the above matters, the recycled positive electrode active material and battery of each of Examples 5 to 8 were produced in the same manner as in Example 1. Measurements using the battery of each of Examples 5 to 8 were carried out in the same manner as in Example 1. The measurement results of each of Examples 5 to 8 are shown in Table 2 below.

### (Comparative Example 1)

In the production of the recycled positive electrode active material of Comparative Example 1, activating agent 2 was not used.
Except for the above matters, the recycled positive electrode active material and battery of Comparative Example 1 were produced in the same manner as in Example 1. Measurements using the battery of Comparative Example 1 were carried out in the same manner as in Example 1. The measurement results of Comparative Example 1 are shown in Table 2 below.

### (Reference Example 1)

In the production of the battery of Reference Example 1, a simulated mixture was used instead of the positive electrode material containing the recycled positive electrode active material.
Except for the above matters, the battery of Reference Example 1 was produced in the same manner as in Example 1. Measurements using the battery of Reference Example 1 were carried out in the same manner as in Example 1. The measurement results of Reference Example 1 are shown in Table 2 below.

**[Table 1]**

| Table 1 | Unit | Reference Example 1 | Comparative Example 1 | Example 1 | Example 2 | Example 3 | Example 4 | Example 5 | Example 6 | Example 7 | Example 8 |
|---|---|---|---|---|---|---|---|---|---|---|---|
| Activating agent 2 | - | - | - | Mg(OH)₂ | Mg(OH)₂ | Mg(OH)₂ | Mg(OH)₂ | Ca(OH)₂ | Ca(OH)₂ | Ca(OH)₂ | Ca(OH)₂ |
| Mass of simulated mixture | g | - | 100 | 100 | 100 | 100 | 100 | 100 | 100 | 100 | 100 |
| Mass of Li replenishment material | g | - | 10.6 | 10.6 | 10.6 | 10.6 | 10.6 | 10.6 | 10.6 | 10.6 | 10.6 |
| Mass of activating agent 1 | g | - | 24.9 | 24.9 | 24.9 | 24.9 | 24.9 | 24.9 | 24.9 | 24.9 | 24.9 |
| Mass of activating agent 2 | g | - | 0.00 | 0.28 | 0.56 | 1.67 | 2.78 | 0.35 | 0.71 | 2.12 | 3.53 |
| Content of activating agent 2 | wt% | - | 0.0 | 0.8 | 1.5 | 4.5 | 7.3 | 1.0 | 2.0 | 5.6 | 9.1 |
| Amount of substance of positive electrode active material | mol | - | 0.955 | 0.955 | 0.955 | 0.955 | 0.955 | 0.955 | 0.955 | 0.955 | 0.955 |
| Amount of substance of Li replenishment material | mol | - | 0.143 | 0.143 | 0.143 | 0.143 | 0.143 | 0.143 | 0.143 | 0.143 | 0.143 |
| Amount of substance of activating agent 1 | mol | - | 0.143 | 0.143 | 0.143 | 0.143 | 0.143 | 0.143 | 0.143 | 0.143 | 0.143 |
| Amount of substance of activating agent 2 | mol | - | 0.000 | 0.005 | 0.010 | 0.029 | 0.048 | 0.005 | 0.010 | 0.029 | 0.048 |
| Positive electrode active material in simulated mixture | mol% | - | 100 | 100 | 100 | 100 | 100 | 100 | 100 | 100 | 100 |
| Proportion of Li replenishment material | mol% | - | 15.0 | 15.0 | 15.0 | 15.0 | 15.0 | 15.0 | 15.0 | 15.0 | 15.0 |
| Proportion of activating agent 1 | mol% | - | 15.0 | 15.0 | 15.0 | 15.0 | 15.0 | 15.0 | 15.0 | 15.0 | 15.0 |
| Proportion of activating agent 2 | mol% | - | 0 | 0.5 | 1.0 | 3.0 | 5.0 | 0.5 | 1.0 | 3.0 | 5.0 |
| Total content of alkaline earth metals in activation treatment agent | mol% | - | 0 | 1.6 | 3.2 | 9.1 | 14.3 | 1.6 | 3.2 | 9.1 | 14.3 |

**[Table 2]**

| Table 2 | Unit | Reference Example 1 | Comparative Example 1 | Example 1 | Example 2 | Example 3 | Example 4 | Example 5 | Example 6 | Example 7 | Example 8 |
|---|---|---|---|---|---|---|---|---|---|---|---|
| Activating agent 2 | - | - | - | Mg(OH)₂ | Mg(OH)₂ | Mg(OH)₂ | Mg(OH)₂ | Ca(OH)₂ | Ca(OH)₂ | Ca(OH)₂ | Ca(OH)₂ |
| Total content of alkaline earth metals in activation treatment agent | mol% | - | 0 | 1.6 | 3.2 | 9.1 | 14.3 | 1.6 | 3.2 | 9.1 | 14.3 |
| Initial charge capacity (0.2 C) | mAh/g | 197 | 187 | 192 | 199 | 198 | 185 | 189 | 195 | 184 | 177 |
| Initial discharge capacity (0.2 C) | mAh/g | 179 | 160 | 172 | 175 | 168 | 155 | 162 | 169 | 156 | 148 |
| Initial charge-discharge efficiency | % | 90.9% | 85.6% | 89.6% | 87.9% | 84.8% | 83.8% | 85.7% | 86.7% | 84.8% | 83.6% |
| Initial charge-discharge recovery rate | % | - | 89.4% | 96.1% | 97.8% | 93.9% | 86.6% | 90.5% | 94.4% | 87.2% | 82.7% |
| Internal resistance (charge transfer resistance) | Ω | 10.1 | 136.0 | 37.8 | 38.8 | 83.4 | 72.5 | 29.1 | 25.1 | 45.3 | 57.4 |
| Discharge capacity of 2nd cycle (0.2 C) | mAh/g | 179.2 | 160.0 | 171.5 | 174.7 | 167.6 | 154.9 | 162.3 | 168.7 | 184.1 | 148.4 |
| Discharge capacity of 3rd cycle (0.5 C) | mAh/g | 172.9 | 152.0 | 164.4 | 166.3 | 159.9 | 147.3 | 156.6 | 162.9 | 156.4 | 142.4 |
| Discharge capacity of 4th cycle (1 C) | mAh/g | 168.1 | 146.7 | 158.8 | 159.6 | 153.7 | 141.3 | 152.0 | 156.7 | 150.5 | 137.6 |
| Discharge capacity of 5th cycle (2 C) | mAh/g | 164.3 | 139.7 | 152.7 | 153.4 | 146.8 | 134.2 | 146.7 | 150.3 | 145.6 | 131.7 |
| Discharge capacity of 6th cycle (5 C) | mAh/g | 156.0 | 130.3 | 143.3 | 142.9 | 135.9 | 123.4 | 138.4 | 141.9 | 139.9 | 123.0 |
| Rate retention rate (2 C/0.2 C) | % | 91.7% | 87.3% | 89.0% | 87.8% | 87.5% | 86.6% | 90.4% | 89.1% | 79.1% | 88.8% |

## Claims

1. A method for producing a recycled positive electrode active material, comprising the following steps:
(1) mixing an activation treatment agent containing one or more alkali metal compounds with a positive electrode mixture containing a positive electrode active material to obtain a mixture,
(2) heating the mixture to a temperature equal to or higher than a melting onset temperature of the activation treatment agent to obtain a heated mixture,
(3) recovering a heated positive electrode active material from the heated mixture,
wherein the activation treatment agent further contains one or more alkaline earth metal hydroxides.
